# FASCICULE DE BREVET EUROPEEN

(11) **EP 3 463 988 B1**
(45) Date de publication et mention de la délivrance du brevet: **11.03.2020**
(21) Numéro de dépôt: 17737314.9
(22) Date de dépôt: 24.05.2017
(51) Int. Cl.: B60R 19/56, B60R 3/00

(54) **DISPOSITIF DE FIXATION ET MARCHEPIED EQUIPE D'UN TEL DISPOSITIF**
BEFESTIGUNGSVORRICHTUNG UND TRITTBRETT MIT SOLCH EINER VORRICHTUNG
ATTACHMENT DEVICE AND RUNNING BOARD COMPRISING SUCH A DEVICE

(30) Priorité: 30.05.2016 FR 1600867
(43) Date de publication de la demande: 10.04.2019
(73) Titulaire: NEXTER Systems, 42300 Roanne (FR)
(72) Inventeur: BERTRAND, Ludovic, 18023 BOURGES (FR); DUCHATEAU, Rémy, 18023 BOURGES (FR); CADENET, Pascal, 18023 BOURGES (FR)
(74) Mandataire: Cabinet Chaillot
(86) Numéro de dépôt international: PCT/FR2017/051313
(87) Numéro de publication internationale: WO 2017/207896

(56) Documents cités:
- EP-A1- 2 821 293
- US-A1- 2007 273 123
- US-B1- 6 450 379
- US-B1- 6 578 666

## Description

Le domaine technique de l'invention est celui des dispositifs de fixation d'équipements sur les flancs d'un véhicule routier.

Afin d'accroitre la capacité d'emport latéral d'un véhicule il est connu du brevet US6450379 un dispositif de fixation comportant un longeron tubulaire fixé par boulonnage perpendiculairement à des éléments structuraux d'un véhicule. Le longeron est orienté perpendiculairement au sens d'avancement du véhicule. Le longeron est disposé à recevoir une barre de section correspondante à l'intérieur du longeron de manière à pouvoir régler télescopiquement la distance de débord de la barre par rapport au côté du véhicule. La partie de la barre dépassant peut alors servir de support à un équipement. Une pluralité de dispositifs de fixation peuvent être répartis en différents endroits sur la longueur du véhicule permettant ainsi la fixation d'équipements longs par exemple.

Un tel moyen de fixation est peu pratique car il impose des modifications lourdes du véhicule du fait des perçages nécessaires au boulonnage. En outre il est long à mettre en place et à retirer puisqu'il nécessite l'emploi d'outils.

Le brevet US6578666 divulgue un dispositif de fixation tel que défini dans le préambule de la revendication 1.

L'invention propose de simplifier la mise en place d'un équipement sur le véhicule, assurant ainsi rapidité et simplicité d'installation et de retrait de l'équipement.

L'invention porte sur un dispositif de fixation destiné à solidariser un équipement avec un dispositif de protection anti-encastrement d'un véhicule qui comporte au moins une barre horizontale, le dispositif de fixation comportant au moins un crochet destiné à suspendre l'équipement sur la barre de manière à soutenir ledit équipement, le dispositif de fixation comportant un moyen de sécurisation qui, dans une position de maintien, est destiné à interférer avec une partie inférieure du dispositif de protection afin d'empêcher un mouvement ascendant du dispositif de fixation relativement au dispositif de protection, le moyen de sécurisation pouvant adopter une position de libération dans laquelle il n'interfère plus avec le dispositif de protection, permettant ainsi le retrait du dispositif de fixation, caractérisé en ce que le moyen de sécurisation comporte une tige pivotante autour d'un axe vertical, tige apte à être positionnée sensiblement parallèlement au dispositif de protection en position de libération et perpendiculairement au dispositif de protection en position de maintien.

Avantageusement, le dispositif de fixation comporte un moyen de blocage du moyen de sécurisation apte à maintenir ce dernier en position de maintien.

Avantageusement, la tige comporte un levier de manipulation destiné à faire pivoter la tige entre la position de libération et la position de maintien et inversement.

Avantageusement, le levier de manipulation est sensiblement perpendiculaire à la tige de manière à être sensiblement parallèle au dispositif de protection lorsque la tige est en position de maintien.

Avantageusement, le moyen de blocage comporte une patte apte à interférer avec le levier lorsque celui-ci est en position de maintien de manière à interdire le retour du levier en position de libération.

Avantageusement, la patte est disposée au-dessus du levier et comporte une liaison pivot perpendiculaire à l'axe de pivotement de la tige de manière à ce que, par gravité, la patte soit orientée à la verticale pour se trouver en travers du mouvement d'ouverture du levier.

L'invention porte également sur un marche pied pour véhicule comportant un dispositif de fixation incorporant au moins l'une des caractéristiques précédentes.

L'invention sera mieux comprise à la lecture de la description suivante, description faite en référence aux dessins en annexe, dessins dans lesquels :
La figure 1 représente une vue de trois quarts d'un véhicule blindé équipé de dispositifs de protection anti-encastrement.
La figure 2 représente une vue de trois quarts d'un véhicule blindé équipé de dispositifs de protection anti-encastrement et d'un marchepied équipé de dispositifs de fixation selon l'invention.
La figure 3 représente une vue en coupe latérale d'un marchepied équipé d'un dispositif de fixation selon l'invention lors de sa mise en place sur un dispositif de protection anti encastrement.
La figure 4 représente une vue en coupe latérale d'un marchepied équipé d'un dispositif de fixation selon l'invention sécurisé sur un dispositif de protection anti encastrement.
La figure 5 représente une vue de détail en perspective d'un marchepied équipé d'un dispositif de fixation selon l'invention en position de libération.
La figure 6 représente une vue de détail en perspective d'un marchepied équipé d'un dispositif de fixation selon l'invention en position de maintien.

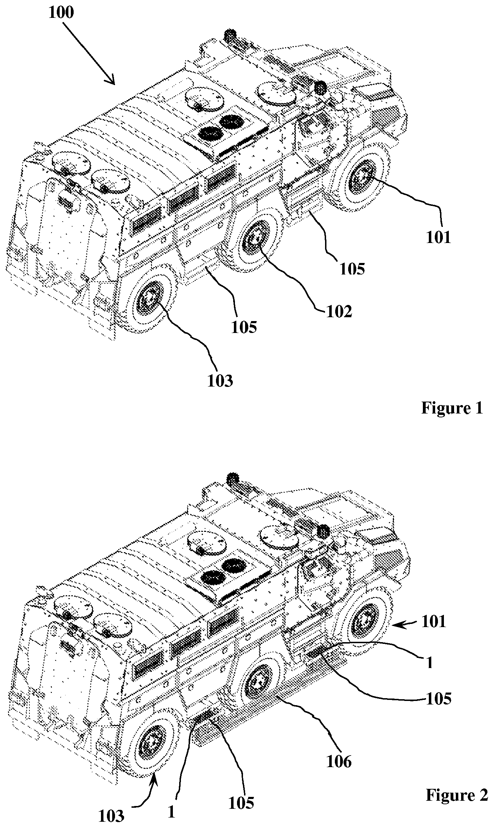

Selon la figure 1, un véhicule militaire 100 comporte entre chacun de ses essieux 101,102,103 un dispositif de protection anti-encastrement 105 conformément aux dispositions d'homologation routière. De telles dispositions sotn décrites dans la révision 1 de l'additif 72 du règlement OTAN n°73 traitant des conditions d'homologation et de la reconnaissance réciproque de l'homologation des équipements et pieces de vehicules à moteur.

De tels dispositifs 105 de protection sont obligatoires afin d'empêcher que, lors d'une collision latérale, un autre véhicule ne puisse se retrouver coincé entre les essieux 101,102,103, risquant alors d'être écrasé.

Selon la figure 2, le véhicule 100 comporte un équipement latéral 106 qui est ici constitué par un marchepied 106 destiné au transport de personnels militaires en dehors des phases d'utilisation du véhicule 100 sur la voie publique. Le marchepied 106 s'étend du bord de la roue du premier essieu 101 au bord de la roue du dernier essieu 103.

Le marchepied 106 est solidaire de dispositifs de fixation 1 situés à chaque extrémité du marchepied 106, dispositifs de fixation 1 destinés à solidariser le marchepied 106 avec les dispositifs de protection anti encastrement 105.

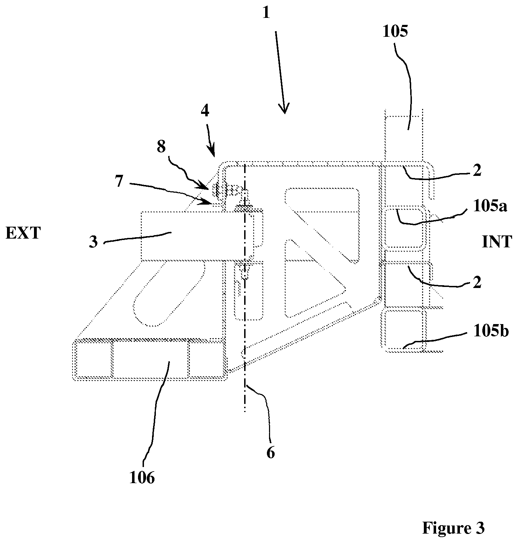

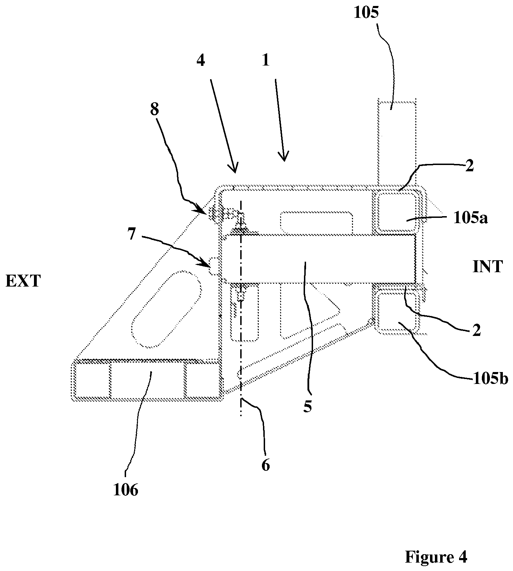

Selon la figure 3, le dispositif de protection 105 comporte deux barres parallèles 105a et 105b horizontales et superposées. Le dispositif de fixation 1 du marchepied 106 comporte deux crochets 2. Chaque crochet 2 permet de suspendre le marchepied sur une barre 105a ou 105b et il a un profil qui correspond avec une barre 105a et 105b au niveau de la face supérieure, de la face extérieure EXT et la face intérieure INT de la barre 105a ou 105b. Ainsi chaque crochet 2 peut soutenir le dispositif de fixation 1 (et le marchepied 106) lorsqu'il est posé sur les barres 105a et 105b tel que visible à la figure 4. Chaque crochet 2 immobilise donc le marchepied 106 suivant les deux directions horizontales (de l'intérieur vers l'extérieur et inversement) et suivant la direction verticale descendante. Le seul degré de liberté restant au crochet est le soulèvement du crochet 2 pour le dégager de la barre 105a ou 105b qui le reçoit.

Le dispositif de fixation 1 comporte un moyen de sécurisation 4. Ce moyen de sécurisation 4 est en position de libération à la figure 3 et il comporte un levier de manipulation 3 permettant de faire passer le moyen de sécurisation 4 de la position de libération à une position de maintien visible à la figure 4, et inversement par pivotement autour d'un axe vertical 6 visible à la figure 4.

Selon la figure 4, le dispositif de fixation 1 est fixé sur les barres 105a et 105b grâce aux crochets 2.

Le moyen de sécurisation 4 comporte une tige 5, solidaire du levier 3, et montée pivotante relativement au dispositif de fixation 1 autour de l'axe 6 vertical. En position de maintien, la tige 5 est orientée sensiblement perpendiculairement aux barres 105a,105b du dispositif de protection anti encastrement 105 et se situe entre les deux barres 105a,105b, donc sous la barre supérieure 105a du dispositif de protection 105, et préférentiellement en contact avec cette barre supérieure 105a.

De cette manière la tige 5 interfère avec une partie inférieure du dispositif de protection anti encastrement 105 bridant tout mouvement ascendant du dispositif de fixation 1 relativement au dispositif de protection 105, empêchant donc le décrochage intempestif du dispositif de fixation 1.

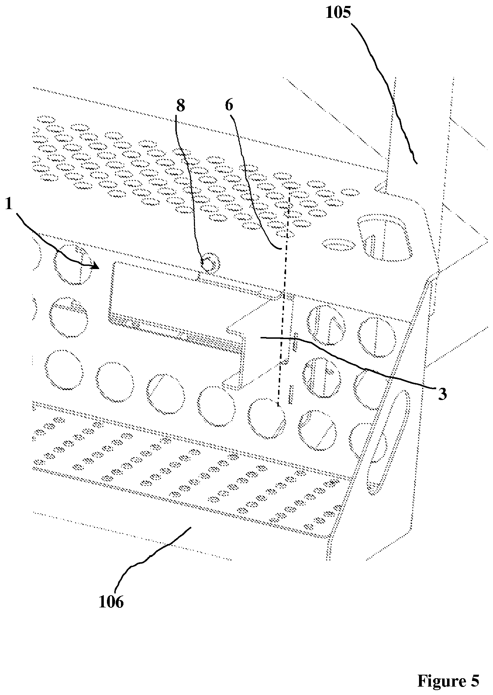

On notera que le levier 3 du moyen de sécurisation 4 est sensiblement perpendiculaire à la tige 5. De ce fait il est sensiblement parallèle au dispositif anti encastrement 105 en position de maintien et fait saillie vers l'extérieur EXT en position de libération comme visible à la figure 5, ce qui met en garde l'utilisateur (utilisateur non représenté) du marchepied 106 sur le fait que le dispositif de fixation n'est pas sécurisé. Pratiquement la tige 5 et le levier 3 forment un levier monobloc en forme de L, levier pivotant autour de l'axe 6.

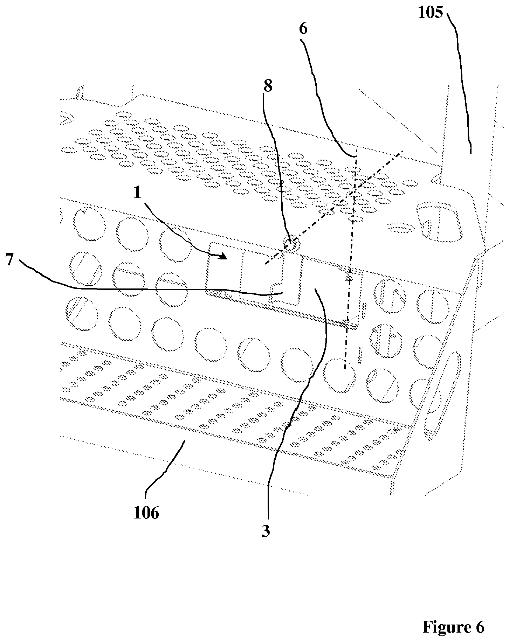

Selon la figure 6 en position de maintien, le levier 3 s'efface le long du dispositif de fixation 1 laissant l'accès total au marchepied 106. Le dispositif de fixation 1 comporte un moyen de blocage 7 comportant une patte 7 pivotante autour d'un axe de pivotement 8 sensiblement perpendiculaire à l'axe vertical 6 du moyen de sécurisation 5.

L'axe de pivotement 8 est situé à une extrémité de la patte 7 et au-dessus du levier 3 de telle manière que, par gravité, lorsque le levier 3 est en position de maintien, la patte 7 interfère avec le levier 3 pour contrer l'ouverture intempestive du dispositif de sécurisation 5 et le bloquer en position de maintien.

L'invention permet donc de fixer un équipement, tel qu'un marchepied, latéralement à un véhicule sans impacter la structure du véhicule et ceci de manière rapide, sûre, et sans outillage.

Il serait possible d'utiliser le dispositif selon l'invention pour fixer un autre type d'équipement à un véhicule, par exemple des containers destinés au transports d'équipements ou d'outillages.

## Revendications

1. Dispositif de fixation (1) destiné à solidariser un équipement (106) avec un dispositif de protection anti-encastrement (105) d'un véhicule (100) qui comporte au moins une barre horizontale (105a), le dispositif de fixation (1) comportant au moins un crochet (2) destiné à suspendre l'équipement (106) sur la barre de manière à soutenir ledit équipement (106), le dispositif de fixation (1) comportant un moyen de sécurisation (4) qui, dans une position de maintien, est destiné à interférer avec une partie inférieure du dispositif de protection (105) afin d'empêcher un mouvement ascendant du dispositif de fixation (1) relativement au dispositif de protection (105), le moyen de sécurisation (4) pouvant adopter une position de libération dans laquelle il n'interfère plus avec le dispositif de protection (105), permettant ainsi le retrait du dispositif de fixation (1), **caractérisé en ce que** le moyen de sécurisation (4) comporte une tige (5) pivotante autour d'un axe vertical (6), tige (5) apte à être positionnée sensiblement parallèlement au dispositif de protection (105) en position de libération et perpendiculairement au dispositif de protection (105) en position de maintien.

2. Dispositif de fixation (1) selon la revendication 1, **caractérisé en ce qu'**il comporte un moyen de blocage (7) du moyen de sécurisation (4) apte à maintenir ce dernier en position de maintien.

3. Dispositif de fixation (1) selon une des revendications 1 ou 2, **caractérisé en ce que** la tige (5) comporte un levier (3) de manipulation destiné à faire pivoter la tige (5) entre la position de libération et la position de maintien et inversement.

4. Dispositif de fixation (1) selon la revendication 3, **caractérisé en ce que** le levier (3) de manipulation est sensiblement perpendiculaire à la tige (5) de manière à être sensiblement parallèle au dispositif de protection (105) lorsque la tige (5) est en position de maintien.

5. Dispositif de fixation (1) selon les revendications 2 à 4, **caractérisé en ce que** le moyen de blocage (4) comporte une patte (7) apte à interférer avec le levier (3) lorsque celui-ci est en position de maintien de manière à interdire le retour du levier (3) en position de libération.

6. Dispositif de fixation (1) selon les revendications 3 à 4 et selon la revendication 5, **caractérisé en ce que** la patte (7) est disposée au-dessus du levier (3) et comporte une liaison pivot (8) perpendiculaire à l'axe de pivotement (6) de la tige (5) de manière à ce que, par gravité, la patte (7) soit orientée à la verticale pour se trouver en travers du mouvement d'ouverture du levier (3).

7. Marche pied (106) pour véhicule (100), **caractérisé en ce qu'**il comporte au moins un dispositif de fixation (1) selon une des revendications précédentes.

## Patentansprüche

1. Befestigungsvorrichtung (1) zum festen Verbinden eines Ausstattungsteils (106) mit einer Unterfahrschutzvorrichtung (105) eines Fahrzeugs (100), die mindestens eine waagerechte Stange (105a) umfasst, wobei die Befestigungsvorrichtung (1) mindestens einen Haken (2) umfasst, um das Ausstattungsteil (106) an die Stange anzuhängen, um das Ausstattungsteil (106) abzustützen, wobei die Befestigungsvorrichtung (1) ein Sicherungsmittel (4) umfasst, das in einer Halteposition dazu dient, mit einem unteren Teil der Schutzvorrichtung (105) zu interferieren, um eine Aufwärtsbewegung der Befestigungsvorrichtung (1) im Verhältnis zur Schutzvorrichtung (105) zu verhindern, wobei das Sicherungsmittel (4) eine Freigabeposition einnehmen kann, in der es nicht mehr mit der Schutzvorrichtung (105) interferiert, wodurch der Rückzug der Befestigungsvorrichtung (1) ermöglicht wird, **dadurch gekennzeichnet, dass** das Sicherungsmittel (4) einen Stab (5) umfasst, der um eine senkrechte Achse (6) herum schwenkbar ist, wobei der Stab (5) im Wesentlichen parallel zur Schutzvorrichtung (105) in der Freigabeposition und rechtwinklig zur Schutzvorrichtung (105) in der Halteposition positioniert sein kann.

2. Befestigungsvorrichtung (1) nach Anspruch 1, **dadurch gekennzeichnet, dass** sie ein Mittel (7) zum Blockieren des Sicherungsmittels (4) umfasst, das letzteres in der Halteposition halten kann.

3. Befestigungsvorrichtung (1) nach einem der Ansprüche 1 oder 2, **dadurch gekennzeichnet, dass** der Stab (5) einen Betätigungshebel (3) umfasst, um den Stab (5) zwischen der Freigabeposition und der Halteposition und umgekehrt zu schwenken.

4. Befestigungsvorrichtung (1) nach Anspruch 1, **dadurch gekennzeichnet, dass** der Betätigungshebel (3) zu dem Stab (5) im Wesentlichen rechtwinklig ist, um zu der Schutzvorrichtung (105) im Wesentlichen parallel zu sein, wenn sich der Stab (5) in der Halteposition befindet.

5. Befestigungsvorrichtung (1) nach einem der Ansprüche 2 bis 4, **dadurch gekennzeichnet, dass** das Blockierungsmittel (4) eine Lasche (7) umfasst, die mit dem Hebel (3) interferieren kann, wenn sich dieser in der Halteposition befindet, um die Rückkehr des Hebels (3) in die Freigabeposition zu untersagen.

6. Befestigungsvorrichtung (1) nach einem der Ansprüche 3 bis 4 und nach Anspruch 5, **dadurch gekennzeichnet, dass** die Lasche (7) über dem Hebel (3) angeordnet ist und eine Schwenkverbindung (8) umfasst, die zur Schwenkachse (6) des Stabs (5) rechtwinklig ist, so dass die Lasche (7) durch Schwerkraft senkrecht ausgerichtet wird, um sich quer zur Öffnungsbewegung des Hebels (3) zu befinden.

7. Trittbrett (106) für Fahrzeuge (100), **dadurch gekennzeichnet, dass** es mindestens eine Befestigungsvorrichtung (1) nach einem der vorhergehenden Ansprüche umfasst.

## Claims

1. An attachment device (1) intended to secure equipment (106) with an underrun protection device (105) of a vehicle (100) that includes at least one horizontal bar (105a), the attachment device (1) including at least one hook (2) for hanging the equipment (106) on the bar so as to support said equipment (106), the attachment device (1) including a securing means (4) which, in a holding position, is intended to interfere with a lower part of the protection device (105) so as to prevent an upward movement of the attachment device (1) relative to the protection device (105), the securing means (4) being able to adopt a released position in which it no longer interferes with the protection device (105), thus allowing the removal of the attachment device (1), **characterised in that** the securing means (4) includes a rod (5) pivoting around a vertical axis (6), the rod (5) being able to be positioned substantially parallel to the protection device (105) in the released position and perpendicular to the protection device (105) in the holding position.

2. The attachment device (1) according to claim 1, **characterised in that** it includes a means (7) for locking the securing means (4) able to keep the latter in the holding position.

3. The attachment device (1) according to one of claims 1 or 2, **characterised in that** the rod (5) includes a manipulation lever (3) for pivoting the rod (5) between the released position and the holding position, and vice versa.

4. The attachment device (1) according to claim 3, **characterised in that** the manipulation lever (3) is substantially perpendicular to the rod (5) so as to be substantially parallel to the protection device (105) when the rod (5) is in the holding position.

5. The attachment device (1) according to claims 2 to 4, **characterised in that** the locking means (4) includes a tab (7) able to interfere with the lever (3) when the latter is in the holding position so as to prevent the lever (3) from returning to the released position.

6. The attachment device (1) according to claims 3 to 4 and according to claim 5, **characterised in that** the tab (7) is arranged above the lever (3) and includes a pivot link (8) perpendicular to the pivot axis (6) of the rod (5) such that, by gravity, the tab (7) is oriented vertically to find itself across the opening movement of the lever (3) .

7. A running board (106) for a vehicle (100), **characterised in that** it includes at least one attachment device (1) according to one of the preceding claims.
